# EUROPEAN PATENT APPLICATION

(11) **EP 4 102 390 A1**
(43) Date of publication of application: **14.12.2022**
(21) Application number: 22176245.3
(22) Date of filing: 30.05.2022
(51) Int. Cl.: G06F 30/12, G06F 113/12

(54) **IMPROVING GARMENT DESIGN PROCESSES WITH 3D CAD TOOLS**

(30) Priority: 08.06.2021 US 202117342512
(71) Applicant: Clothing Tech LLC, Austin, TX 78750 (US)
(72) Inventor: WILCOX, William, Austin, TX 78735 (US)
(74) Representative: Kaminski Harmann

(57) **Abstract**

The invention relates to three computer implemented methods, wherein the computer implemented methods allow for a faster and more intuitive garment design process. The improved garment design process is achieved using CAD tools.

## Description

### FIELD OF THE INVENTION

The present invention relates to computer implemented methods for efficiently designing garments.

### BACKGROUND OF THE INVENTION

Garment design is a laborious process. The process as traditionally carried out has distinct stages and requires people with different skill sets. The garment design process typically starts with a garment designer who draws in 2D the proposed garment from different perspectives. The 2D drawings created by the garment designer are taken by a pattern maker who creates 2D patterns that can be sewn together. Once sewn together, the sewn 2D patterns should produce the proposed garment. A sample maker produces a physical garment using the 2D patterns, wherein the produced physical garment may be draped onto a human or a dress form, for example. The garment designer may inspect the draped garment and request additional modifications if the draped garment deviates from the ideal garment as envisioned by the garment designer. Modifications if needed are made to the 2D patterns to improve the potential product. As the changes are made to 2D patterns, it is potentially difficult to determine how the changes will impact the resulting draped garment.

### OBJECT OF THE INVENTION

It is therefore an object of the present invention to provide computer implemented methods allowing a simpler garment design process.

It is a further object of the present invention to provide computer implemented methods allowing the laborious work of the pattern maker and the sample maker to be eliminated.

These objects are achieved by realizing at least part of the features of the independent claims. Features which further develop the invention in an alternative or advantageous manner are described in the dependent patent claims.

### SUMMARY OF THE INVENTION

The invention relates to a computer implemented method, with program code being stored on a machine readable medium or embodied as an electromagnetic wave, for generating 2D pattern pieces representing garment panels that a garment is to be fabricated from, the computer implemented method comprising visualizing a 3D garment model representing the garment on an avatar in a virtual 3D environment with a graphical user interface (GUI) configured to receive user input, providing an altered 3D garment model by adjusting, based on user input provided via the GUI, at least one GUI element that is linked to a parameter representing a distance, area or space between the 3D garment model and the avatar at a defined location 3D garment model, generating the 2D pattern pieces so as to conform to the altered 3D garment model, providing a reassembled 3D garment model by reassembling the generated 2D pattern pieces on the avatar, and visualizing the reassembled 3D garment model on the avatar in the virtual 3D environment.

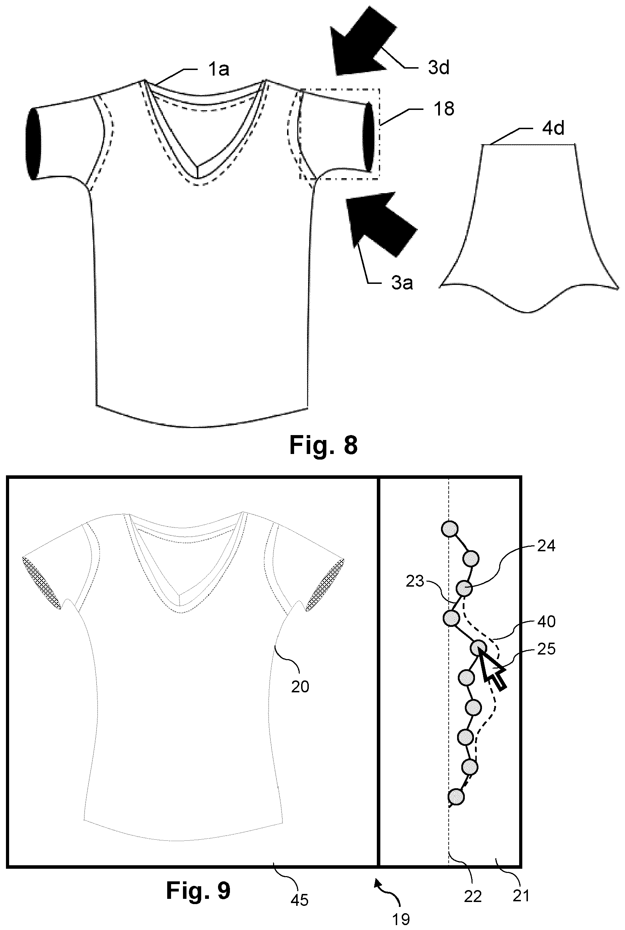

The term "providing an altered 3D garment model by adjusting, based on user input provided via the GUI, at least one GUI element ..." has to be understood, in the light of the whole description and figures 9-13, as "providing alterations to the 3D garment model by adjusting, based on user input provided via the GUI, at least one GUI element...".

In some embodiments, the GUI element is at least in part linked to the defined location.

In some embodiments, the defined location is a circumference of the 3D garment model at a defined height.

In some embodiments, a center of the circumference is located on a vertical axis of the 3D garment model.

In some embodiments, by the adjustment of the GUI element, said parameter is altered.

In some embodiments, said parameter is determined with a relaxed 3D garment model spatially not restricted by the avatar.

In some embodiments, the at least one GUI element comprises a shapeable line, said shapeable line proceeding adjacent to a neutral line parallel to a vertical axis of the 3D garment model and at least part of the shapeable line being shapeable horizontally.

In some embodiments, the at least one GUI element comprises anchor points, said anchor points distributed adjacent to a neutral line parallel to a vertical axis of the 3D garment model and the anchor points being slidable horizontally.

In some embodiments, the anchor points are located on and along said shapeable line, wherein the anchor points are slidable and the shapeable line follows the anchor points with smooth transitions.

In some embodiments, the shapeable line is a spline and the anchor points are knots of the spline.

In some embodiments, the at least one GUI element comprises a slidable line, said slidable line proceeding parallel to a horizontal axis of the 3D garment model and the slidable line as a whole being slidable vertically.

In some embodiments, by adjusting the slidable line, the parameter linked to the slidable line is associated to the location of the 3D garment model where the adjusted slidable line is located.

In some embodiments, by adjusting the slidable line, a length of the 3D garment model is adjusted accordingly.

In some embodiments, the at least one parameter to be changed is associated with a sleeve radius, a chest circumference, a waist measurement, or a torso length of the 3D garment model.

In some embodiments, the avatar is embodied as a mannequin.

In some embodiments, reassembling is based on a resewing functionality.

In some embodiments, altering the garment and generating the at least one 2D pattern is carried out simultaneously.

In some embodiments, the GUI comprises a presets window in the GUI, said presets window configured for providing a set of selectable fit profiles, each fit profile comprising a plurality of parameters.

In some embodiments, the GUI comprises a presets window in the GUI, said presets window configured for providing a set of selectable length profiles, each length profile comprising a plurality of parameters.

In some embodiments, the presets window comprises an intensity fader configured to determine to what degree a selected profile is applied.

In some embodiments, while adjusting, the 2D pattern pieces (so as to conform to the alterations to the 3D garment model) are regenerated on demand, i.e. after confirmation of the alterations.

### FURTHER ASPECTS OF THE DISCLOSURE

The invention relates to a first computer implemented method, with program code being stored on a machine readable medium or embodied as an electromagnetic wave, for generating at least one 2D pattern of a garment to be fabricated. The first computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) altering the relaxed 3D CAD model by changing at least one parameter parametrizing the relaxed 3D CAD model based on user input provided via the graphical user interface, the alteration providing an altered 3D CAD model 3) generating the at least one 2D pattern so as to conform to at least a part of the altered 3D CAD model 4) providing a modified 3D CAD model by reassembling the generated at least one 2D pattern on the avatar 5) determining an updated relaxed 3D CAD model using the modified 3D CAD model, wherein the updated relaxed 3D CAD model is placed on the avatar, the updated relaxed 3D CAD model representing the garment to be fabricated, and 6) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the first computer implemented method, alters the relaxed 3D CAD model of the first garment via the graphical user interface provided by the computer program. Alteration can proceed e.g. by clicking - via the graphical user interface - on a part of the relaxed 3D CAD model of the first garment and by changing the shape of the part through a drag operation. Clicking can for example be carried out using a computer mouse connected to a computing unit executing the computer program, or using a touch screen, or using a touch pen. The click-and-drag operation changes at least one parameter parametrizing the relaxed 3D CAD model of the first garment. Besides click-and-drag, alteration can proceed by clicking on a part of the relaxed 3D CAD model of the first garment, and then by actively changing at least one parameter parametrizing the part of the relaxed 3D CAD model. The alteration provides an altered 3D CAD model.

The computer program providing the first computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

Since the alteration of the relaxed 3D CAD model of the first garment may change the overall shape and mechanical behavior of the first garment and since the modified 3D CAD model is reassembled from the generated at least one 2D pattern which conforms to the altered 3D CAD model, the modified 3D CAD model is typically not in a state of physical equilibrium. If, for example, sleeves of the first garment were lengthened, the lengthened sleeves would exert a greater force on the torso of the first garment via a connecting seam on account of the larger mass of the lengthened sleeve. Starting with the modified 3D CAD model, an updated relaxed 3D CAD model is determined, wherein the updated relaxed 3D CAD model is in static equilibrium, i.e. the unbalanced forces on account of the alteration made to the relaxed 3D CAD model of the first garment are physically propagated through the entire 3D CAD model to reach a rest state, providing the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the first computer implemented method, the at least one parameter to be changed relates to sleeve length, sleeve radius, chest circumference, waist measurement, torso length or neck opening of the first garment. It is understood that the at least one parameter to be changed may also relate to other geometric properties of the relaxed 3D CAD model. The above list mainly possesses exemplary character.

The invention also relates to a second computer implemented method, with program code being stored on a machine readable medium or embodied as an electromagnetic wave, for generating at least one 2D pattern of a garment to be fabricated. The second computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by changing at least one seam and/or at least one edge of the first garment in the projected garment model and/or by adding at least one seam and/or at least one edge of the first garment in the projected garment model and/or by removing at least one seam in the projected garment model, wherein the alteration is based on user input provided via the graphical user interface, the alteration providing a geometrically altered projected garment model 5) back projecting the geometrically altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the second computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

According to the invention, the projected garment model is altered by changing at least one seam and/or at least one edge of the first garment in the projected garment model and/or by adding at least one seam and/or at least one edge of the first garment in the projected garment model and/or by removing at least one seam in the projected garment model. Alteration can proceed e.g. by clicking - via the graphical user interface - on a seam visible in the projected garment model and by changing the shape of the seam through a drag operation. Clicking can for example be carried out using a computer mouse connected to a computing unit executing the computer program, or using a touch screen or a touch pen. The garment designer may also draw a new seam onto the projected garment model using the graphical user interface. An existing seam may also be removed based on user instruction provided via the graphical user interface. The alteration provides a geometrically altered projected garment model.

The computer program projects the geometrically altered projected garment model back onto the relaxed 3D CAD model. The projecting back may be automatically carried out once e.g. a seam alteration has been carried out, or the projecting back may alternatively be carried out based on a command provided to the computer program via the graphical user interface. As a result of the back projecting, an altered 3D CAD model is obtained.

The computer program providing the second computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. The changed position of a seam between a sleeve and a torso of a t-shirt, for example, may change the forces acting between sleeve and torso. Starting with the modified 3D CAD model, an updated relaxed 3D CAD model is determined, wherein the updated 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated relaxed 3D CAD model, the garment designer may stop the design process.

In an embodiment of the second computer implemented method, the changed at least one seam and/or the added at least one seam and/or the removed at least one seam is embodied as a plain seam, French seam, flat or abutted seam, or lapped seam. It is understood that the mentioned seam embodiments are purely exemplary and do not preclude other seam types.

In another embodiment of the second computer implemented method, the changed at least one edge of the first garment and/or added at least one edge of the first garment is embodied as a hem or as a finish.

In a further embodiment of the second computer implemented method, a position of the changed at least one seam and/or at least one edge of the first garment and/or a position of the added at least one seam and/or at least one edge of the first garment is described by a Bezier curve or by a polyline, wherein at least one control point of the Bezier curve is based on control point user input provided via the graphical user interface. It is understood that the Bezier curve and the polyline are purely exemplary and do not preclude other line descriptions.

A Bezier curve may be easily modified via a graphical user interface by changing the position of control points determining the shape of the Bezier curve. A user of the computer program providing the second computer implemented method may therefore easily change and/or add a seam and/or a garment edge by adding and/or removing control points of Bezier curves, for example.

The invention further relates to a third computer implemented method, with program code being stored on a machine readable medium or embodied as an electromagnetic wave, for generating at least one 2D pattern of a garment to be fabricated. The third computer implemented method comprises the following steps: 1) visualizing a relaxed 3D CAD model of a first garment in a virtual 3D environment with a graphical user interface configured to receive user input, wherein the relaxed 3D CAD model is placed on an avatar placed into the virtual 3D environment based on avatar user input provided via the graphical user interface 2) defining a position and orientation of a 2D plane in the virtual 3D environment relative to the relaxed 3D CAD model based on user input provided via the graphical user interface 3) projecting the relaxed 3D CAD model onto the 2D plane, thereby obtaining a projected garment model 4) altering the projected garment model by adding at least one print and/or at least one embellishment onto at least a part of the projected garment model, wherein the adding of the at least one print and/or at least one embellishment is based on user input, the alteration providing an additively altered projected garment model 5) back projecting the additively altered projected garment model onto the relaxed 3D CAD model, the back projection providing an altered 3D CAD model 6) generating the at least one 2D pattern based on the altered 3D CAD model, wherein the generated at least one 2D pattern conforms to at least a part of the altered 3D CAD model 7) providing a modified 3D CAD model by reassembling the generated at least one 2D pattern on the avatar 8) determining an updated relaxed 3D CAD model using the modified 3D CAD model, wherein the updated relaxed 3D CAD model is placed on the avatar, the updated relaxed 3D CAD model representing the garment to be fabricated, and 9) visualizing the updated relaxed 3D CAD model of the garment to be fabricated in the virtual 3D environment.

A 3D CAD model of a first garment is visualized in a relaxed state on an avatar in a virtual 3D environment, wherein the term relaxed refers to a physical state in which the 3D CAD model is in static physical equilibrium. A garment designer using a computer program, said computer program being configured to provide the third computer implemented method, alters the first garment via the graphical user interface provided by the computer program. The garment designer (user) defines the position and orientation of a 2D plane in the virtual 3D environment relative to the relaxed 3D CAD model. The computer program projects the relaxed 3D CAD model onto the 2D plane defined by the user, thereby obtaining a projected garment model. By changing the placement of the 2D plane, the garment designer is able to view the relaxed 3D CAD model from different points of view. The 2D plane may be visualized in the virtual 3D environment in which the relaxed 3D CAD model is displayed. The projected garment model may be visually displayed to the garment designer who then alters the projected garment model.

According to the invention, the projected garment model is altered by adding at least one print and/or at least one embellishment onto at least a part of the projected garment model. A print may for example be added to sleeves of a t-shirt, for example. Alteration can proceed e.g. by selecting through clicking - via the graphical user interface - the part of the projected garment model and by adding the desired pattern and/or embroidery to the selected part. Clicking can for example be carried out using a computer mouse connected to a computing unit executing the computer program, or using a touch screen or a touch pen. The garment designer may also draw a print and/or embroidery onto the projected garment model using the graphical user interface. The alteration provides an additively altered projected garment model.

The computer program projects the additively altered projected garment model back onto the relaxed 3D CAD model. The projecting back may be automatically carried out once a print and/or embellishment alteration has been carried out, or the projecting back may alternatively be carried out based on a command provided to the computer program via the graphical user interface. As a result of the back projecting, an altered 3D CAD model is obtained.

The computer program providing the third computer implemented method generates at least one 2D pattern conforming to the altered 3D CAD model. The at least one 2D pattern is generated in such a way as to correspond to the altered 3D CAD model once sewn together. According to the invention, the generated at least one 2D pattern is reassembled on the avatar by the computer program. Reassembling takes into account seam information, for example, wherein distinct 2D patterns sharing a seam are reassembled in a neighborly manner, for example. The reassembling may simulate the fabrication process of fabricating a garment given 2D patterns. The reassembling provides a modified 3D CAD model. According to the invention, at least one 2D pattern is generated, wherein the at least one generated 2D pattern corresponds to at least a part of the altered 3D CAD model. For example, only 2D patterns corresponding to the sleeves of the altered 3D CAD model may be generated.

The alteration of the relaxed 3D CAD model of the first garment may change the overall shape and mechanical behavior of the first garment. An added print and/or embroidery may change the mechanical behavior of a fabric, for example by making the fabric stiffer. Changed mechanical properties of fabrics may influence the overall shape of the proposed garment. Starting with the modified 3D CAD model, an updated relaxed 3D CAD model is determined, wherein the updated relaxed 3D CAD model is in static equilibrium, i.e. the alterations made to the relaxed 3D CAD model of the first garment are physically propagated through the entire 3D CAD model to reach a rest state, the rest state corresponding to the updated relaxed 3D CAD model.

The garment designer may now inspect the updated relaxed 3D CAD model, wherein the updated relaxed 3D CAD model is graphically displayed via the graphical user interface. In case the garment designer is satisfied with the updated 3D CAD model, the garment designer may stop the design process.

In an embodiment of one of the first, second or third computer implemented method, the following steps are carried out: 1) selecting the at least a part of the altered 3D CAD model based on selection user input provided via the graphical user interface, the selection user input comprising selection information relating to the altered 3D CAD model 2) the generating of the at least one 2D pattern provides only those 2D patterns relating to the at least a part of the altered 3D CAD model determined based on the selection user input.

The part of the altered 3D CAD model for which 2D patterns are determined may be determined through user input, for example by delineating the part by drawing lines around the desired part of the altered 3D CAD model using the graphical user interface.

In a further embodiment of one of the first, second or third computer implemented method, the determination of the updated relaxed 3D CAD model is at least based on 1) the modified 3D CAD model 2) the avatar 3) fabric information about at least one mechanical property of at least one fabric of the first garment, and 4) gravity, wherein the direction in which gravity acts is provided to the 3D virtual environment via gravity user input provided via the graphical user interface.

A set of equations describing the mechanics of garments is solved, wherein the modified 3D CAD model is an initial state for the set of equations, the solving providing a mechanical evolution and a rest state 3D CAD model at the end of the mechanical evolution, the rest state 3D CAD model characterized in that all physical forces acting on the rest state 3D CAD model are in static equilibrium, the rest state 3D CAD model being the updated relaxed 3D CAD model. The set of equations takes into account at least the fabric information, gravity and geometrical constraints imposed by the avatar on the mechanically evolving modified 3D CAD model and contact forces between the mechanically evolving modified 3D CAD model and the avatar.

The alteration of the relaxed 3D CAD model of the first garment may change the structure and size of the forces acting on the 3D CAD model. The modified 3D CAD model may for example be provided to a simulation engine specialized for simulating garments. Computer program(s) providing the first, second or third computer implemented method may call the simulation engine, or the simulation engine may be a part of the computer program(s). Starting with at least the modified 3D CAD model and information about the mechanical behavior of fabrics used for the garment and/or seam types/positions and information about the avatar and gravity, the simulation engine may simulate the mechanical evolution of the modified 3D CAD model until a rest state is found in which all forces acting on the (then found) updated relaxed 3D CAD model are in static equilibrium.

In a further embodiment of one of the first, second or third computer implemented method, the set of equations is provided by a finite element method acting on the modified 3D CAD model, the finite element method taking into account at least the fabric information, gravity and the avatar.

In a further embodiment of one of the first, second or third computer implemented method, the avatar is embodied as a mannequin.

The garment designer may desire to view a proposed garment directly on an avatar which is similar to an eventual buyer of the fabricated proposed garment. A human-shape avatar (mannequin) may be displayed in the virtual 3D environment, wherein the shape and size of the human-shape avatar may be chosen by the garment designer via the graphical user interface. The relaxed 3D CAD model and the updated relaxed 3D CAD model are placed on the avatar, wherein placement may for example occur by draping the virtual garment around the avatar.

In an embodiment of one of the second or third computer implemented method, the projecting of the relaxed 3D CAD model onto the 2D plane is carried out using a parallel projection, wherein the direction to which the projection is parallel is determined based on projection direction user input provided via the graphical user interface, or the projecting is carried out using a central projection, wherein a center of projection is determined based on projection center user input provided via the graphical user interface, wherein for parallel projection each point of the 2D plane is associated to a parallel projection line and for central projection each point of the 2D plane is associated to a central projection line.

Projecting may be embodied as parallel projection or central projection. In the former case, the projection direction may need to be provided by the garment designer, while in the latter case, the garment designer may additionally specify a center of projection in the virtual 3D environment via the graphical user interface. The computer program(s) providing the second computer implemented method or the third computer implemented method may also propose a 2D plane to the garment designer in case the garment designer clicks on a part of the relaxed 3D CAD model, for example. The proposed 2D plane may be automatically determined in such a way as to provide an optimal viewing of the part of the relaxed 3D CAD model on which the garment designer clicked. The computer program(s) may also allow for zooming in the 2D plane, wherein based on user input parts of the projected garment model are enlarged, while other parts of the projected garment model are not shown any more.

In a further embodiment of one of the second or third computer implemented method, the projecting comprises using for a point of the 2D plane the associated parallel projection line and/or the associated central projection line, and mapping a first point of the relaxed 3D CAD model intersecting the associated parallel projection line and/or the associated central projection line onto the point of the 2D plane, wherein the first point is determined looking along the associated parallel projection line and/or central projection line towards the 2D plane.

In a further embodiment of one of the second or third computer implemented method, the back projecting is an inverse operation to the projecting, the back projecting comprising using for a point of the 2D plane the associated parallel projection line and/or the associated central projection line, and mapping the point onto a last point of the relaxed 3D CAD model intersecting the associated parallel projection line and/or the associated central projection line, wherein the last point is determined looking along the associated parallel projection line and/or central projection line away from the 2D plane.

In an embodiment of the third computer implemented method, the at least one embellishment comprises distressing at least one fabric and/or adding embroidery. It is understood that distressing and adding embroidery are only illustrative examples and do not preclude other types of embellishments. The garment designer may for example also doodle a drawing on the projected garment model.

In a further embodiment of the third computer implemented method, the added at least one print and/or at least one embellishment is taken into account by the set of equations, wherein the additive alterations change the mechanical behavior of at least the part of the altered 3D CAD model corresponding to the additively altered at least a part of the projected garment model.

In a further embodiment of one of the first, second or third computer implemented method, the reassembling comprises resewing functionality.

In a further embodiment of one of the first, second or third computer implemented method, the altering of the first garment and the generating of the at least one 2D pattern is carried out simultaneously.

The 2D patterns may be generated in parallel to the alterations done to the relaxed 3D CAD model of the first garment. Once a parameter of the relaxed 3D CAD model is changed, for example, 2D patterns may be generated in parallel which correspond to the altered 3D CAD model.

The following list of numbered items are embodiments comprised by the present invention:
**1**. Computer implemented method, with program code being stored on a machine readable medium or embodied as an electromagnetic wave, for generating 2D pattern pieces representing garment panels that a garment is to be fabricated from, the computer implemented method comprising
   visualizing a 3D garment model representing the garment on an avatar in a virtual 3D environment with a graphical user interface (GUI) configured to receive user input,
   providing an altered 3D garment model by adjusting, based on user input provided via the GUI, at least one GUI element that is linked to a parameter representing a distance, area or space between the 3D garment model and the avatar at a defined location 3D garment model,
   generating the 2D pattern pieces so as to conform to the altered 3D garment model,
   providing a reassembled 3D garment model by reassembling the generated 2D pattern pieces on the avatar, and
   visualizing the reassembled 3D garment model on the avatar in the virtual 3D environment.
**2**. Computer implemented method according to item 1, wherein the GUI element is at least in part linked to the defined location.
**3**. Computer implemented method according to item 2, wherein the defined location is a circumference of the 3D garment model at a defined height.
**4.** Computer implemented method according to item 3, wherein a center of the circumference is located on a vertical axis of the 3D garment model.
**5.** Computer implemented method according to item 1, wherein, by the adjustment of the GUI element, said parameter is altered.
**6**. Computer implemented method according to item 1, wherein said parameter is determined with a relaxed 3D garment model spatially not restricted by the avatar.
**7.** Computer implemented method according to item 1, wherein the at least one GUI element comprises a shapeable line, said shapeable line proceeding adjacent to a neutral line parallel to a vertical axis of the 3D garment model and at least part of the shapeable line being shapeable horizontally.
**8.** Computer implemented method according to item 1, wherein the at least one GUI element comprises anchor points, said anchor points distributed adjacent to a neutral line parallel to a vertical axis of the 3D garment model and the anchor points being slidable horizontally.
**9.** Computer implemented method according to item 7 and 8, wherein the anchor points are located on and along said shapeable line, wherein the anchor points are slidable and the shapeable line follows the anchor points with smooth transitions.
**10.** Computer implemented method according to item 9, wherein the shapeable line is a spline and the anchor points are knots of the spline.
**11**. Computer implemented method according to item 1, wherein the at least one GUI element comprises a slidable line, said slidable line proceeding parallel to a horizontal axis of the 3D garment model and the slidable line as a whole being slidable vertically.
**12**. Computer implemented method according to item 11, wherein by adjusting the slidable line, the parameter linked to the slidable line is associated to the location of the 3D garment model where the adjusted slidable line is located.
**13.** Computer implemented method according to item 11, wherein by adjusting the slidable line, a length of the 3D garment model is adjusted accordingly.
**14.** Computer implemented method according to item 1, wherein the at least one parameter to be changed is associated with a sleeve radius, a chest circumference, a waist measurement, or a torso length of the 3D garment model.
**15.** Computer implemented method according to one of items 1, wherein the avatar is embodied as a mannequin.
**16.** Computer implemented method according to one of items 1, wherein reassembling is based on a resewing functionality.
**17**. Computer implemented method according to item 1, wherein altering the garment and generating the at least one 2D pattern is carried out simultaneously.
**18.** Computer implemented method according to item 1, wherein the GUI comprises a presets window in the GUI, said presets window configured for providing a set of selectable fit profiles, each fit profile comprising a plurality of parameters.
**19.** Computer implemented method according to item 1, wherein the GUI comprises a presets window in the GUI, said presets window configured for providing a set of selectable length profiles, each length profile comprising a plurality of parameters.
**20**. Computer implemented method according to one of items 17 and 18, wherein the presets window comprises an intensity fader configured to determine to what degree a selected profile is applied.

### BRIEF DESCRIPTION OF THE DRAWINGS

The inventive system is described below in more detail purely by way of example with the aid of concrete exemplary embodiments illustrated schematically in the drawings, further advantages of the invention also being examined. Identical elements are labelled with the same reference numerals in the figures. In detail:
Figure 1 shows a schematic and illustrative depiction of a t-shirt with short sleeves and corresponding 2D patterns;
Figure 2 shows a schematic and illustrative depiction of a t-shirt with longer sleeves and corresponding 2D patterns;
Figure 3 shows a schematic and illustrative depiction of a t-shirt with short sleeves and a projection of the t-shirt onto a 2D projection plane;
Figure 4 shows a schematic and illustrative depiction of a human avatar dressed with a t-shirt;
Figure 5 shows a schematic and illustrative depiction of a t-shirt with short sleeves with added patterns;
Figure 6 shows a schematic and illustrative depiction of a computing unit and a display providing a graphical user interface;
Figure 7 shows a schematic and illustrative depiction of the prior art garment design process;
Figure 8 shows a schematic and illustrative depiction of a selective generation of 2D patterns;
Figure 9-12 show embodiments of a virtual 3D environment with a graphical user interface; and
Figure 13 shows an embodiment of a graphical user interface.

### DETAILED DESCRIPTION OF THE DRAWINGS

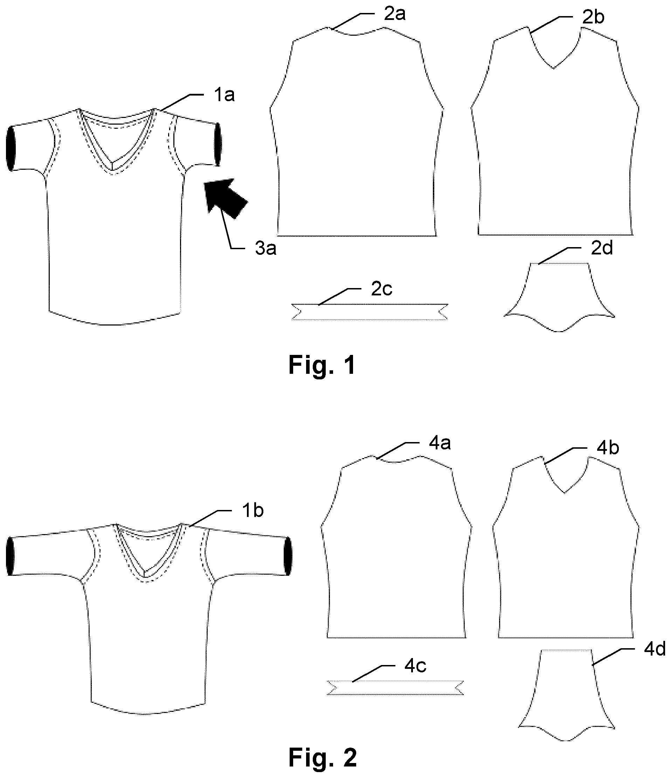

**Figure 1** shows a schematic and illustrative depiction of a t-shirt 1a with short sleeves and corresponding 2D patterns 2a,2b,2c,2d. The t-shirt 1a with short sleeves and the corresponding 2D patterns 2a,2b,2c,2d are displayed in a virtual 3D environment provided by e.g. a computing unit and an associated display. The t-shirt 1a with short sleeves is in a rest state, i.e. all physical forces acting on the t-shirt 1a with short sleeves are in static equilibrium. An exemplary physical force acting on the t-shirt 1a with short sleeves is gravity, wherein the direction in which gravity acts in the virtual 3D environment may be provided by a user to a computer program stored on the computing unit and providing the virtual 3D environment. The user of the computer program is able to interact with the t-shirt 1a with short sleeves via the graphical user interface. The user may decide to lengthen a sleeve of the t-shirt 1a with short sleeves. Via the graphical user interface, the user may provide an instruction 3a to the computer program to lengthen the sleeve.

**Figure 2** shows a t-shirt 1b with long sleeves in a rest state obtaining by altering the t-shirt 1a with short sleeves. The garment design process, in Figures 1 and 2 embodied as a t-shirt design process, proceeds directly in the virtual 3D environment. A designer alters a short-sleeve t-shirt 1a directly in the virtual 3D environment, for example by issuing a command 3a to lengthen the sleeves by a certain amount. Besides sleeve length alterations, any other alterations may be carried out by the designer, alterations for example relating to sleeve radius, chest circumference, waist measurement, torso length, neck opening etc. Alterations may be directly done in the virtual 3D environment, providing an altered t-shirt. The computer program generates 2D patterns 4a,4b,4c,4d corresponding to the altered t-shirt. The 2D patterns 4a,4b,4c,4d are then reassembled in 3D by the computer program, the reassembling providing a modified t-shirt. The modified t-shirt is typically not in static equilibrium. After lengthening a sleeve, for example, the additional mass of each longer sleeve exerts a force on the respective seam between the torso of the modified t-shirt and each longer sleeve. The computer program providing the virtual 3D environment comprises garment simulation routines which - upon receiving the modified t-shirt as input, for example - solve a set of mechanical equations describing garment physics with the modified t-shirt as initial input until an updated t-shirt 1b with long sleeves in rest state is determined, all physical forces acting on the updated t-shirt 1b with long sleeves being in static equilibrium. The 2D patterns 4a,4b,4c,4d allow the updated t-shirt 1b with long sleeves to be fabricated.

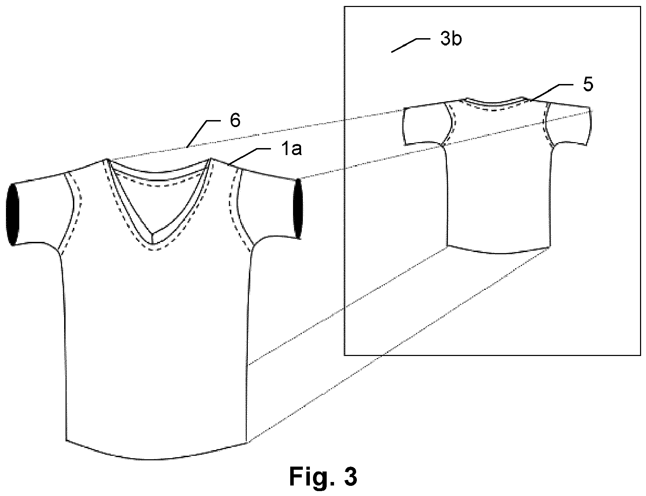

**Figure 3** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. By placing the 2D projection plane 3b at different positions and orientations with respect to the t-shirt 1a with short sleeves, a garment designer is able to obtain different projections of the t-shirt 1a with short sleeves. The garment designer is able to directly interact with the projected t-shirt 5 by e.g. changing a seam and/or removing a seam and/or adding a seam to the projected t-shirt 5. The accordingly altered projected t-shirt 5 is projected back on the t-shirt 1a with short sleeves, wherein the projecting back is done along the same rays as used for the projecting 6 in the opposite direction, providing an altered t-shirt with short sleeves.

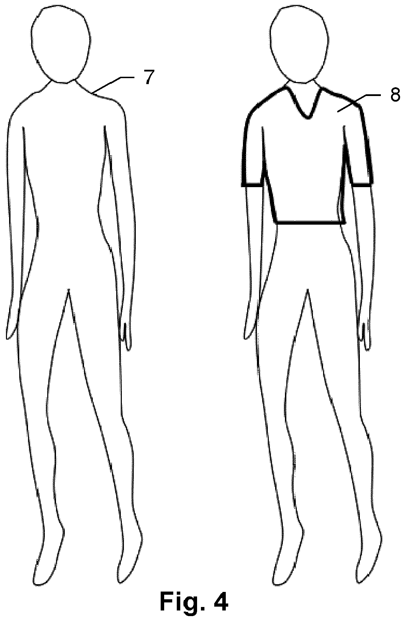

**Figure 4** shows a schematic and illustrative depiction of a human avatar 7 dressed with a t-shirt 8. The avatar 7 as shown in Figure 4 is virtual, i.e. both the avatar 7 and the avatar 7 dressed with the t-shirt 8 are provided in the virtual 3D environment. The avatar 7 and the dressing of the avatar may be incorporated into a garment design process, wherein parts of the design process are for example embodied in Figures 1 and 2. A t-shirt in rest state is placed on the avatar 7. Subsequently it is altered by the garment designer, the alteration providing an altered t-shirt. 2D patterns corresponding to the altered t-shirt are then generated and reassembled, the reassembling providing a modified t-shirt. The modified t-shirt, being placed on the avatar 7, is provided to a garment simulation routine. The garment simulation routine takes into account geometric constraints imposed by the avatar 7 on the shape of the t-shirt as well as forces, for example friction forces, between the t-shirt and the avatar 7 for determination of a t-shirt 8 at rest using at least the modified t-shirt as input.

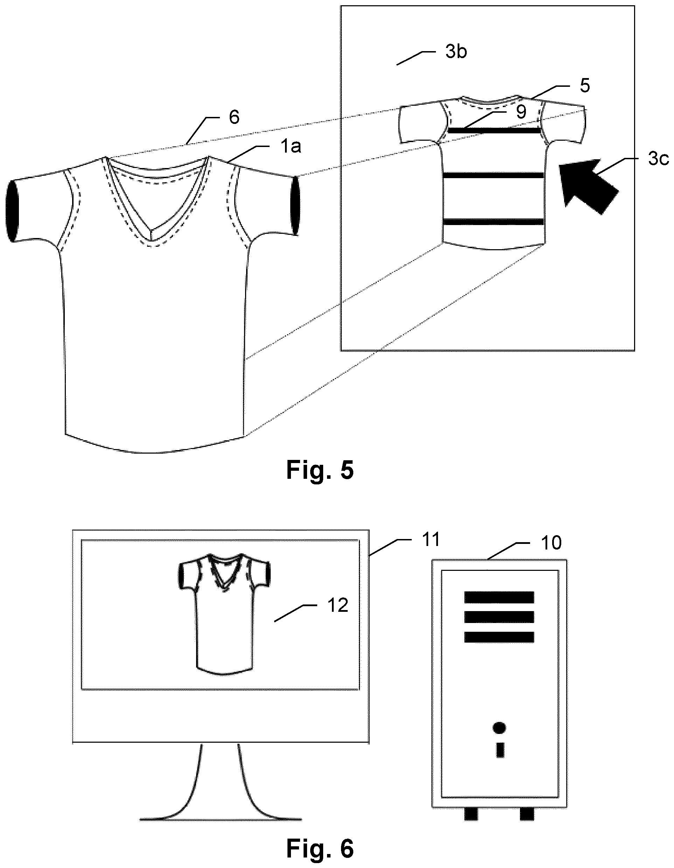

**Figure 5** shows a schematic and illustrative depiction of a t-shirt 1a with short sleeves and a projection 6 of the t-shirt 1a onto a 2D projection plane 3b chosen by a user of the computer program providing the virtual 3D environment. In Figure 3, the 2D projection plane 3b is placed behind the t-shirt 1a with short sleeves. Projecting may be embodied as a central projection or as a parallel projection, for example. The projected t-shirt 5 corresponds to a view of the t-shirt 1a with short sleeves from the back. An additive pattern 9 is added to the projected t-shirt 5 with short sleeves based on user input 3c provided via the graphical user interface. Besides added patterns, embellishments such as embroidery can be added to a garment as well based on user input. After adding prints 9 and/or embellishments onto the projected t-shirt 5, a back projecting as in Figure 3 translates these changes into changes of the t-shirt 1a itself. The added prints and/or embroidery may change the mechanical behavior of the fabric constituting the altered t-shirt.

**Figure 6** shows a schematic and illustrative depiction of a computing unit 10 and a display 11 providing the graphical user interface 12. The computer program providing the virtual 3D environment and the garment simulation routine may be stored on the computing unit. The graphical user interface 12 via which a garment designer may design a garment uses the display 11 associated to the computing unit 10.

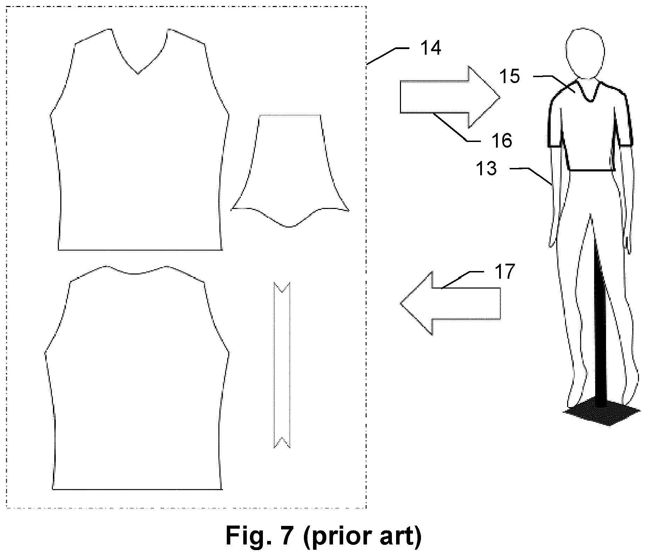

**Figure 7** shows a schematic and illustrative depiction of the prior art garment design process. A garment designer draws in 2D different perspectives of a proposed garment. A pattern maker creates 2D patterns 14 which can be sewn together to create the proposed garment. A sample maker then produces a physical garment which can be placed 16 onto a physical avatar 13, for example. If the garment designer is not satisfied with the look of the physical garment 15 on the physical avatar 13, modifications 17 to the 2D patterns 14 are made. The entire process is iterative in nature and laborious.

**Figure 8** shows a schematic and illustrative depiction of a selective generation of 2D patterns. The garment designer provides an instruction 3a via the graphical user interface to the computer program to lengthen the sleeves of a t-shirt 1a with short sleeves, for example. The lengthening provides an altered t-shirt. The garment designer may provide a further instruction 3d via the graphical user interface, wherein the further instruction 3d creates a selection region 18 in the virtual 3D environment. The 2D pattern generation carried out based on the altered t-shirt obtained after lengthening the sleeves only generates those 2D patterns 4d which correspond to parts of the altered t-shirt in the created selection region 18. The selection region may be created both before and after alteration of the t-shirt.

**Figure 9** shows a window 19 with a virtual 3D environment 45 and an editing field 21, which both act as graphical user interface. The virtual 3D environment 45 shows a three-dimensional depiction 20 of a relaxed garment. The 3D garment model 20 is virtually worn by a three-dimensional avatar, which in this example is visually hidden but still restricts the garment model in its position.

In the editing field 21, there is a neutral line 22 and a shapeable line 23 that can be horizontally moved by clicking and holding an anchor point 24 with a mouse cursor 25 and releasing it somewhere else. A horizontal distance between the neutral line 22 and the shapeable line 23 is representative for a fit of the garment on the avatar at the height of the respective anchor point that was shifted. Dragging an anchor point left from the neutral line 22 means that the garment not only sits tight on the skin of the avatar at this height, but does so under tension (e.g. tight fit, stretched fit). The line 23 being right from the neutral line 22 means that there is ease (e.g. casual fit) at the respective height. Accordingly, the shapeable line 23 matching the neutral line 22 would mean that the 3D garment model would exactly dimensioned as the avatar.

In other words, the neutral line 22 corresponds to the horizontal circumference of the avatar at any height of the garment. The shapeable line 23 diverging from that neutral line 22 defines in what way the current garment design is deviating from the avatar shape. The dashed line 40 indicates the original settings (or the previous settings) that the user so far departed from.

The spaces left and right from the neutral line 22 within the editing field 21 define in each case a scale for the draggable circles 24. That is, the maximum adjustment is limited by the dimensions of the editing field, wherein the scale should be set so that a reasonable or usual adjustment range is given. However, said scales could also be adjusted upfront depending on the type of garment to be designed.

In particular, the left side and the right side (relative to the line 22) of the editing field 21 can have different scales. For example, the left side (defining what stretch the garment is exposed to) could have a larger scale than the right side (defining what ease the garment has relative to the avatar). That means, for making adjustments (in the millimeter range) to a body tight fit there is relatively more space available, i.e. a fine-adjustment is provided here, and the movement for adjusting the ease (usually many centimeters) is more direct.

The line 23 can be customized by shifting the anchor points 24 in a way as desired by the designer or customer. While adjusting, the garment 20 can be modified in real-time or the garment 20 can be regenerated after each adjustment or on demand. That way, the designer has immediate feedback on his adjustments.

The adjustability provided by the GUI 19 as shown in figure 9 is very useful for designers as they can achieve a desired fit of the garment in a matter of seconds what usually takes them minutes or hours.

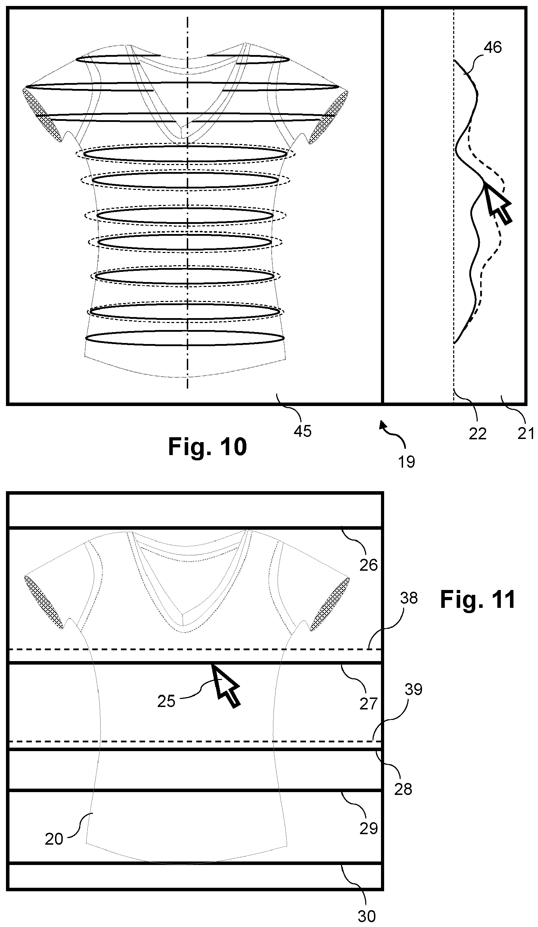

A similar exemplary GUI is shown in **Figure 10****.** Here, however, the shapeable line 46 is alone in the editing field 21, i.e. without distinctive anchor points which are optional. The shapeable line 46 can be reshaped anywhere, so that there are quasi infinite anchor points, or at least a lot more intervals compared to figure 9 where the line can be modified. So to any spot the user may click to on the line and reshape it will be determined to which height in the 3D model this spot corresponds and then the circumference will be adjusted accordingly (see the exemplary dashed circumferences and the full-lined circumferences of the 3D garment model in the window 45).

On demand means that the regeneration/recalculation of the 2D pattern pieces and the reassembled 3D garment model is not carried out after each parameter change, instead the parameters can be changed until the user is satisfied and then the parameter selection is actively confirmed, e.g. by pressing a confirmation button.

The advantage of regenerating the 2D pattern pieces on demand and then reassembling the 2D pattern pieces into a reassembled 3D garment model is that an easy-to-use interface and a high degree of user-friendliness can be achieved. Since the regeneration/recalculation of the 2D pattern pieces and the reassembled 3D garment model can take e.g. a few seconds (e.g. 2 to 5 seconds), an interruption would otherwise occur every time a parameter is changed (e.g. by moving the line 22 in the editing field 21). By providing a visualisation of the changed parameters (e.g. by the changeable line 22 in the editing field 21) next to the displayed model according to the invention, an intuitive and clear operation/parameter input is possible, i.e. an almost fluent varying of the parameters (without jerking/disruptions in the software).

**Figure 11** shows horizontal slidable lines 26-30, which can be vertically adjusted by the cursor 25. They mark characteristic heights of the garment 20, such as the shown shoulder end 26, the bottom end 30, the chest line 27, the waist line 28, and the hip line 29. By dragging a line up or down and release it, the user can shift these characteristic heights to a desired level. The length of the overall garment will be adapted accordingly. For example, when dragging the line 27 down as shown in figure 11, the circumference that is currently set at the chest's height of the garment will be set at the newly set height. The dashed lines 38 and 39 indicate where the chest lines were before.

In real-time or after confirmation of the new settings, the garment surface above the dragged chest line 27 will be automatically reshaped to maintain a smooth transition between the circumference at the chest line 27 as a first anchor point and the circumference spaced by a defined distance above the line 27 as a second anchor point. In the same manner, the garment model surface below the line that has been dragged on will be reshaped to maintain a smooth transition overall while the restrictions as set by the lines 26-30 are respected. If one of the outer lines 26 and 30 is dragged on, the garment is shortened or lengthened.

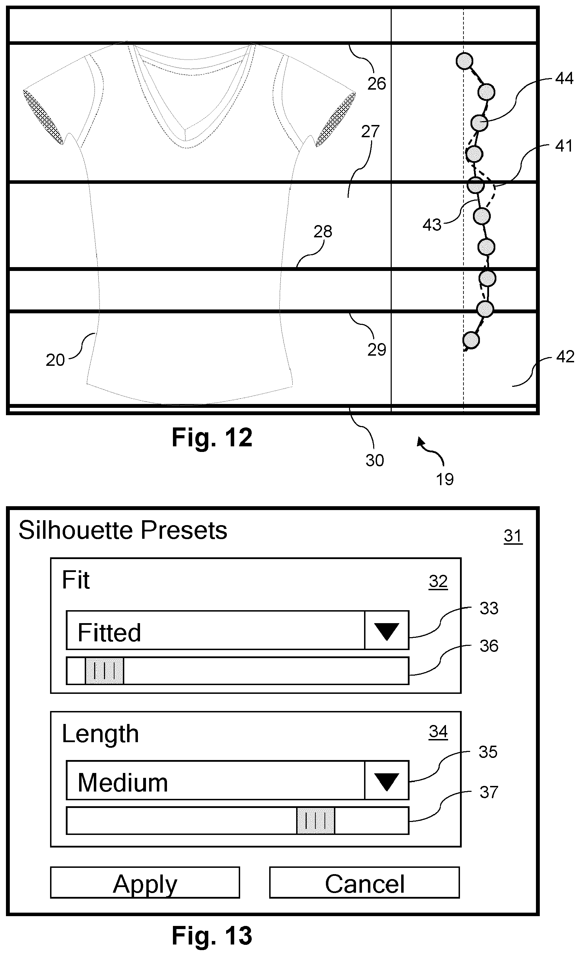

Accordingly, as can be displayed with the optional field 42 in **figure 12****,** the ease profile 43 is adapted to these manipulations of the lines 27 and 28. The dashed line 41, again, may be displayed to indicate the previous settings. When the window 42 is added as shown here in figure 12, apart from the height adjustments with the lines 26-30, the anchor points 44 can additionally be used to further modify the garment model, in particular at the height of the characteristic lines 26-30. **Figure 12** also illustrate how the 3D garment model 20 is regenerated after the edits from figure 11 are applied. It can be seen that the garment is now stretched longer and the characteristic lines 27 (edited), 28 (edited), 29 (adapted), and 30 (adapted) are shifted downwards. They still mark the characteristic areas of the avatar (chest, hip, waist, etc.).

The alterations as shown on the examples of figures 9-12 are automatically translated in the background into changes on the 2D patterns that correspond to the displayed 3D garment model.

The invention is not limited to the shown amount of horizontal (slidable) lines for height adjustment but can be any amount between one and any plurality. Likewise, the amount of optional anchor points 24/44 is not necessarily as shown but can be more or less.

Settings of the anchor points 24 that form a desired curve 23 can also be stored as characteristic fits and be applied for other garment models loaded into the program or created in the program by selecting them from a list of preset fits. **Figure 13** shows an example of a presets window 31 comprising a field 32 with a drop-down list 33 with such silhouette presets. Optionally, as shown, there can also be provided a field 34 for a length profile that can be chosen from drop-down list 35. Again optionally, the GUI can provide sliders 36 and/or 37 for metering the selected presets. A fit profile selected (and optionally fine-adjusted by the slide bar) retrieves a setting of such a profile curve as shown in figure 9, numeral 23. A length profile selected (and optionally fine-adjusted by the slide bar) retrieves a setting of horizontal lines as presented in the following. A fit preset can also introduce an offset for the neutral line or a different scaling of the spaces left and right from the neutral line.

Although the invention is illustrated above, partly with reference to some preferred embodiments, it must be understood that numerous modifications and combinations of different features of the embodiments can be made. All these modifications lie within the scope of the appended claims.

## Claims

1. Computer implemented method, with program code being stored on a machine readable medium or embodied as an electromagnetic wave, for generating 2D pattern pieces representing garment panels that a garment is to be fabricated from, the computer implemented method comprising
visualizing a 3D garment model representing the garment on an avatar in a virtual 3D environment with a graphical user interface (GUI) configured to receive user input,
providing alterations to the 3D garment model by adjusting, based on user input provided via the GUI, at least one GUI element that is linked to a parameter representing a distance, area or space between the 3D garment model and the avatar at a defined location 3D garment model,
generating the 2D pattern pieces so as to conform to the alterations to the 3D garment model,
providing a reassembled 3D garment model by reassembling the generated 2D pattern pieces on the avatar, and
visualizing the reassembled 3D garment model on the avatar in the virtual 3D environment.

2. Computer implemented method according to claim 1, wherein the GUI element is at least in part linked to the defined location.

3. Computer implemented method according to claim 2, wherein the defined location is a circumference of the 3D garment model at a defined height.

4. Computer implemented method according to claim 3, wherein a center of the circumference is located on a vertical axis of the 3D garment model.

5. Computer implemented method according to claim 1, wherein
,by the adjustment of the GUI element, said parameter is altered, or
said parameter is determined with a relaxed 3D garment model spatially not restricted by the avatar.

6. Computer implemented method according to claim 1, wherein the at least one GUI element comprises
a shapeable line, said shapeable line proceeding adjacent to a neutral line parallel to a vertical axis of the 3D garment model and at least part of the shapeable line being shapeable horizontally, or
anchor points, said anchor points distributed adjacent to a neutral line parallel to a vertical axis of the 3D garment model and the anchor points being slidable horizontally.

7. Computer implemented method according to claim 6, wherein the anchor points are located on and along said shapeable line, wherein the anchor points are slidable and the shapeable line follows the anchor points with smooth transitions.

8. Computer implemented method according to claim 7, wherein the shapeable line is a spline and the anchor points are knots of the spline.

9. Computer implemented method according to claim 1, wherein the at least one GUI element comprises a slidable line, said slidable line proceeding parallel to a horizontal axis of the 3D garment model and the slidable line as a whole being slidable vertically.

10. Computer implemented method according to claim 9, wherein by adjusting the slidable line,
the parameter linked to the slidable line is associated to the location of the 3D garment model where the adjusted slidable line is located, or
a length of the 3D garment model is adjusted accordingly.

11. Computer implemented method according to claim 1, wherein the at least one parameter to be changed is associated with a sleeve radius, a chest circumference, a waist measurement, or a torso length of the 3D garment model.

12. Computer implemented method according to claim 1, wherein the avatar is embodied as a mannequin or wherein reassembling is based on a resewing functionality.

13. Computer implemented method according to claim 1, wherein the GUI comprises a presets window in the GUI, said presets window configured for
providing a set of selectable fit profiles, each fit profile comprising a plurality of parameters, or
providing a set of selectable length profiles, each length profile comprising a plurality of parameters.

14. Computer implemented method according to claim 13, wherein the presets window comprises an intensity fader configured to determine to what degree a selected profile is applied.

15. Computer implemented method according to claim 1, wherein while adjusting, the 2D pattern pieces (so as to conform to the alterations to the 3D garment model) are regenerated on demand, i.e. after confirmation of the alterations.
